Europäisches Patentamt

European Patent Office

Office européen des brevets

(19)

(11) Publication number: **0 328 666**

**A1**

(12)

# EUROPEAN PATENT APPLICATION
## published in accordance with Art. 158(3) EPC

(21) Application number: 88906120.6

(22) Date of filing: 21.07.88

(86) International application number:
PCT/JP88/00736

(87) International publication number:
WO 89/01198 (09.02.89 89/04)

(51) Int. Cl.⁴: **G05B 19/403**

(30) Priority: 24.07.87 JP 184988/87

(43) Date of publication of application:
**23.08.89 Bulletin 89/34**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **MATSUMURA, Teruyuki**
**38-8, Matsugaya Hachioji-shi**
**Tokyo 192-03(JP)**
Inventor: **MINESHIGE, Takahiko Fanuc Dai 3**
**Villa Karamatsu**
**3527-1, Shibokusa Oshino-mura**
**Minamitsuru-gun**
**Yamanashi 401-05(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) **INTERACTIVE PROGRAMMING APPARATUS.**

(57) An interactive programming apparatus for preparing an NC tape for use in numerically controlled (NC) machine tools. When a plurality of machining steps are to be defined on a portion of the material, a color corresponding to the kind of machining designated by the latest machining step is displayed on the screen. Therefore, even when the machining for the same material is defined for a plurality of portions, the kind of machining designated for the portion can be easily discriminated depending upon the color displayed on each of the portions.

Fig. 1

## INTERACTIVE PROGRAMMING APPARATUS

Technical Field

This invention relates to a conversational-type programming apparatus which originates an NC tape for a numerically controlled (NC) machine tool or the like.

Background Art

Automatic programming for originating an ordinary NC tape utilizes an electronic computer to enter a tool path and other machining conditions on an NC tape based on a design drawing. In order to shorten the time from origination of a part program to completion of the NC tape and reduce programming errors, various conversational-type automatic programming apparatus having a CRT or other display function have been developed.

According to the process through which NC statements are generated by a conversational-type automatic programming apparatus, system data conforming to the type of machine tool is read in from a magnetic tape cassette, and use is made of a variety of data files stored at such time. More specifically, an operator causes a CRT to display various conversational-type data read and written while referring to a file, and originates a part program while observing the display. Meanwhile, processing is executed by the programming apparatus each time one line of the part program is entered, and this is stored in memory as an NC program step.

In a case where a C-axis machining step is created for performing predetermined machining such as drilling a hole in the end face of a workpiece with the conversational automatic programming apparatus of the above type, the conventional practice is to define a C-axis profile which prependicularly intersects the Z axis of the blank profile on a blank profile display screen. Next, a cursor is moved to a predetermined region of the defined C-axis profile and the particulars of a predetermined machining operation are selected, whereupon the color in which the region corresponding thereto is displayed temporarily changes, thereby informing the operator of the fact that the part program has been created.

The data file utilized in this case is constituted as a separate data file depending upon the type of machining, such as counter-boring, drilling and tapping, even if the C-axis machining is the same. Accordingly, since the displayed color of the predetermined region of the blank temporarily changes at the moment one machining definition procedure from among the definition procedures ends, the operator can readily determine, on a region-by-region basis, whether a machining step regarding a machining type specified for each region has already been created.

However, with regard to origination of a machining program in which a C-axis profile is defined by a plurality of machining types, if machining which will not cause a change in the blank profile itself is selected, the displayed color indicating the region for which machining has been completed will vanish each time the data file is updated, and the color of the display will return to that of the original blank profile. As a result, the machining step will no longer be visually distinguishable. Furthermore, when a C-axis profile defined with regard to the same blank extends over a plurality of locations, the data files are read out in succession and it is particularly difficult to specify a region of the blank that is to be machined based thereon. In other words, with regard to situations in which only the displayed color of a profile temporarily changes without an accompanying change in the profile on the display screen, as in the case of counter-boring, drilling and tapping, it becomes difficult for the operator to understand the display when a program is created.

Disclosure of the Invention

The present invention has been devised in order to solve the foregoing problems and its object is to provide a conversational-type programming apparatus in which, with regard to a region of a blank for which a machining type has been designated, the displayed color thereof is made different for each defined machining type when displaying the profile of the blank.

In accordance with the present invention, there is provided a conversational-type programming apparatus in which machining steps of a program to be executed are successively inputted from a profile display screen of a blank profile, comprising program originating means for specifying a predetermined region of the blank and designating a type of machining performed at the region, memory means for storing a programmed machining type for each region of the blank, and display color control means for classifying by color a machining type, which has been designated by the latest machining step, based upon the stored machining particulars, and displaying the machining type on the profile display screen.

Accordingly, the conversational-type programming apparatus of the present invention is such that, when a plurality of machining operations are defined for one region of a blank, a color corresponding to a machining type designated by the latest machining step is displayed on the screen. Therefore, even when a machining operation for the same blank is defined for a plurality of regions of the blank, it is possible to readily distinguish the machining type designated for each region based on the displayed colors of the regions.

Brief Description of the Drawings

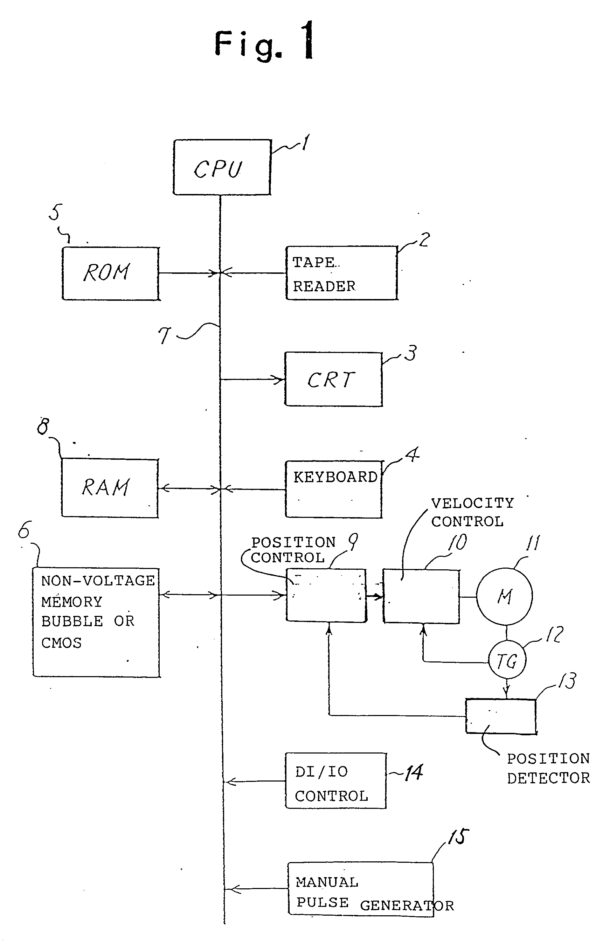

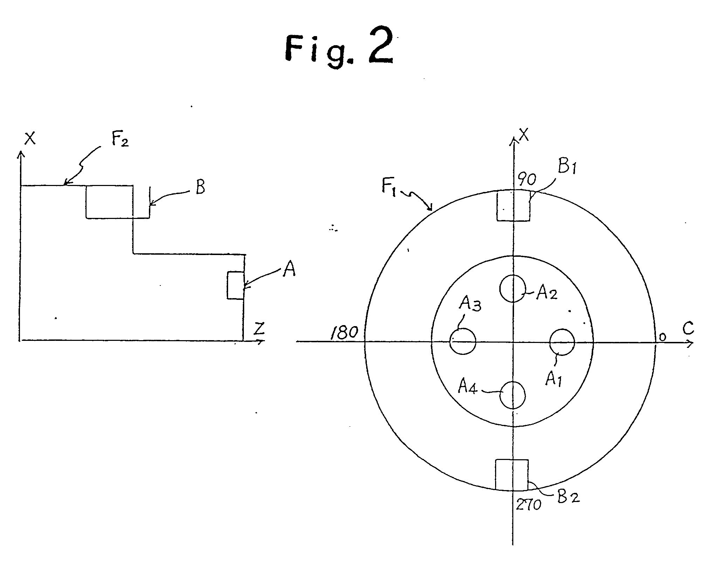

Fig. 1 is a block diagram illustrating an embodiment of the present invention, and Fig. 2 is a view illustrating an example of a display screen.

Best Mode for Carrying Out the Invention

An embodiment of the present invention will now be described in detail with reference to the drawings.

Fig. 1 is a block diagram illustrating an example of a hardware configuration in a case where a conversational-type automatic programming apparatus is used along with an NC apparatus. Connected to a processing unit (CPU) 1 are a tape reader 2 for reading NC commands from an NC tape, a CRT 3 for displaying program information, machine-side operations and the like, and a keyboard 4 for inputting data manually for the purpose of program revision and the like. Also provided are a ROM 5 storing various control programs for running the system, which includes the NC apparatus, efficiently, and a non-volatile memory 6 for storing, in file format, a part program which stores, according to part, a control program for subjecting a part to milling or the like, or various data necessary for machining.

A RAM 8, which has a read/write capability, is connected to a bus line 7 of the CPU 1, is used as a working memory when a motor 11 of a movable element of a machine tool is controlled by the CPU 1 via position control means 9 and velocity control means 10, or is employed in control of the display screen of CRT 3. The motor 11 has a velocity detecting tachogenerator (TG) 12 and a position detector 13 which respectively feed back actual velocity and present position in response to a command signal from the CPU 1. An exchange of signals between the CPU and peripheral equipment including the machine tool is controlled by an input/output controller (DI/DO controller) 14 via the bus line 7, and the movable element of the machine tool can be made to execute a predetermined operation manually by a manually pulse generator 15.

Fig. 2 is an example of a C-axis profile definition display for conversational-type automatic programming. A profile $F_1$ (C-axis profile) of the end face of a blank and a profile $F_2$ of a cross section of the blank in a plane defined by Z and X axes are displayed by white-colored lines on the screen called to the CRT 3. Four end-face holes $A_1$ - $A_4$ and side-face longitudinal grooves $B_1$, $B_2$ are defined on the screen.

First, when a counterboring machining process is selected from the display and an NC program is created, the corresponding file is called from the non-volatile memory 6, a cursor is placed at the positions of the four end-face holes and a predetermined key input is made. As a result, each of the regions of the blank successively change to the color green on the screen of the CRT 3 based on the display control data in RAM 8. Next, when a drilling machining process number is entered and a machining step is generated while each region is specified by a separate file, the green display color of the displayed end-face hole changes to red on each occasion. Thereafter, when a tapping machining process is selected and a program for applying tapping machining to the four end-face holes is inputted in similar fashion, the displayed colors change to yellow. Finally, upon confirming the end of machining definition for each of the end-face holes, the operator selects a grooving machining process and inputs a machining step regarding the longitudinal grooves in the side face.

In a case where a plurality of machining types are designated in such C-axis machining, there are instances where the progress of machining on the screen cannot be recognized as a change in the profile of the blank. However, since it is arranged so that different colors are decided in accordance with machining type so that the end of definition in each process can readily be distinguished on the display screen, as in the embodiment described above, the arrangement is particularly advantageous in a case where, say, a specific one of the end-face holes $A_1$ - $A_4$ is subjected to tapping.

The invention is useful not only in this C-axis machining programming but also in the creation of programs regarding types of machining in which the stage of progress cannot be visualized from the display of the blank profile.

With the apparatus of the embodiment described above, the color of the region of a defined profile on a profile display screen changes, and a change in the profile due to actual machining is displayed as a change in color on the screen and is stored in memory. Regions of the defined profile are each displayed in a predetermined color on the display screen also when a transition is made to a program step regarding the next machining type.

As a result, the operator is capable of distinguishing this visually and can readily select a prescribed region. Thus, since colors are made different for each and every type of machining, the stage of progress of machining can readily be distinguished. This is advantageous when defining a plurality of machining operations for one region. Moreover, even if there are a plurality of locations at which a profile is defined, it is possible to clearly recognize how far the definition of machining at each region has progressed. This is desirable also in terms of preventing machining procedure setting errors.

Though an embodiment of the present invention has been described, the invention is not limited thereto but can be modified in a variety of ways without departing from the scope of the claims.

Industrial Applicability

The conversational-type programming apparatus of the present invention is so adapted that a display classified by color for each type of machining is presented with regard to regions of a blank for which types of machining have already been defined. This makes it possible to readily specify a region of a blank to be machined based on a called data file.

Claims

1. A conversational-type programming apparatus in which machining steps of a program to be executed are successively inputted from a profile display screen of a blank profile, comprising:
program originating means for specifying a predetermined region of said blank and designating a type of machining performed at the region;
memory means for storing a programmed machining type for each region of the blank; and
display color control means for classifying by color a machining type, which has been designated by the latest machining step, based upon the stored machining particulars, and displaying the machining type on said profile display screen.

2. A conversational-type programming apparatus according to claim 1, characterized in that said program means generates a C-axis machining step of the blank.

# Fig. 1

# Fig. 2

# INTERNATIONAL SEARCH REPORT

International Application No  PCT/JP88/00736

## I. CLASSIFICATION OF SUBJECT MATTER (if several classification symbols apply, indicate all) [6]

According to International Patent Classification (IPC) or to both National Classification and IPC

Int.Cl$^4$  G05B19/403

## II. FIELDS SEARCHED

### Minimum Documentation Searched [7]

| Classification System | Classification Symbols |
|---|---|
| IPC | G05B19/403 |

### Documentation Searched other than Minimum Documentation to the Extent that such Documents are Included in the Fields Searched [8]

| | |
|---|---|
| Jitsuyo Shinan Koho | 1971 - 1988 |
| Kokai Jitsuyo Shinan Koho | 1971 - 1988 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | JP, A, 60-126711 (Fanuc Ltd.) 6 July 1985 (06. 07. 85) Page 3, upper right column, line 2 to page 4, lower left column, line 17 (Family: none) | 1, 2 |
| A | JP, A, 58-155411 (Mitsubishi Electric Corporation) 16 September 1983 (16. 09. 83) Page 2, lower left column, line 19 to lower right column, line 9 (Family: none) | 1, 2 |
| A | JP, A, 59-225404 (Fanuc Ltd.) 18 December 1984 (18. 12. 84) Page 2, upper right column, line 14 to lower left column | 1, 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| October 13, 1988 (13. 10. 88) | October 24, 1988 (24. 10. 88) |
| International Searching Authority | Signature of Authorized Officer |
| Japanese Patent Office | |

Form PCT/ISA/210 (second sheet) (January 1985)